Europäisches Patentamt

European Patent Office

Office européen des brevets

(19)

(11) **EP 0 662 602 B1**

(12) **FASCICULE DE BREVET EUROPEEN**

(45) Date de publication et mention
de la délivrance du brevet:
**18.03.1998 Bulletin 1998/12**

(51) Int Cl.⁶: **G01C 21/20**

(21) Numéro de dépôt: **94402942.0**

(22) Date de dépôt: **20.12.1994**

(54) **Procédé de navigation terrestre**

Landnavigationsverfahren

Procedure for terrestrial navigation

(84) Etats contractants désignés:
**DE GB IT**

(30) Priorité: **06.01.1994 FR 9400077**

(43) Date de publication de la demande:
**12.07.1995 Bulletin 1995/28**

(73) Titulaire: **SOCIETE D'APPLICATIONS GENERALES D'ELECTRICITE ET DE MECANIQUE SAGEM Société anonyme française F-75783 Paris Cédex 16 (FR)**

(72) Inventeur: **Zibell, Laurent**
**F-75015 Paris (FR)**

(74) Mandataire: **Bloch, Gérard et al**
**2, square de l'Avenue du Bois**
**75116 Paris (FR)**

(56) Documents cités:
**DE-A- 3 439 000**      **GB-A- 2 264 836**

## Description

La présente invention concerne un procédé de navigation terrestre dans lequel, au moyen d'instruments d'aide à la navigation associés à un mobile, on estime un tronçon de trajectoire du mobile et des caractéristiques associées du relief parcouru que l'on compare à des caractéristiques homologues d'une carte du relief concerné pour en déterminer la position réelle horizontale du tronçon de trajectoire.

La navigation terrestre a normalement pour but de fournir une indication de la position d'un véhicule terrestre, en contact avec le sol, émergé ou immergé sous l'eau.

Pour déterminer la position d'un véhicule terrestre, un procédé peut consister à estimer sa position, à partir d'informations fournies par des capteurs de déplacement embarqués, tels qu'un odomètre et un magnétomètre, fournissant respectivement la distance parcourue, depuis une position de départ, et le cap.

Cependant, ces capteurs ont une précision limitée, si bien que la position estimée est entachée d'une incertitude qui croît progressivement avec la distance parcourue.

Il est aussi connu, dans le domaine aéronautique, d'estimer l'altitude du relief survolé par un aéronef, par un calcul de la différence entre l'altitude de l'aéronef, fournie par un baro-altimètre, et sa hauteur par rapport au relief, fournie par une radiosonde. Le profil de relief ainsi estimé pour une suite de points d'un tronçon de trajectoire est comparé à des profils qui sont déterminés en entraînant le tronçon en balayage horizontal, sur un modèle numérique de terrain, parallèlement à lui-même autour de sa position estimée. On relève ainsi, sur le modèle numérique de terrain, une suite de profils que l'on compare à celui qui a été calculé d'après les mesures, et on isole celui qui présente la meilleure corrélation avec le profil calculé et qui correspond à la position de balayage confondue avec la position horizontale réelle recherchée du tronçon de trajectoire.

Ce procédé par corrélation d'altitude, appliqué à un véhicule terrestre, ne nécessiterait qu'un baro-altimètre, sans radiosonde. Cependant, malgré cette simplification, il resterait encore coûteux à mettre en oeuvre et fournirait des résultats incertains. En effet le baro-altimètre fournit un signal comportant beaucoup de bruit et il doit être associé à une centrale inertielle, plus stable, filtrant les variations d'altitude, ce qui accroît le coût. En outre, le relief rencontré par un véhicule terrestre est en général moins accentué que celui survolé par un aéronef et varie moins vite compte tenu de la vitesse limitée du véhicule terrestre, si bien que les mesures d'écarts d'altitude seraient très imprécises.

La présente invention vise à s'affranchir de ces limitations.

A cet effet, l'invention concerne un procédé du type mentionné ci-dessus, caractérisé par le fait que lesdites caractéristiques sont représentatives de l'orientation, dans un repère terrestre, de la normale au relief considéré.

L'information pertinente peut aussi être fournie, sous une forme parfaitement équivalente, par un vecteur s'étendant le long de la ligne de plus grande pente et fournissant la même information que ladite normale, à laquelle il est perpendiculaire. Bref, l'invention propose finalement ce qu'on peut appeler un procédé de corrélation de pente.

Les caractéristiques de l'invention, associées au relief, ne dépendent pas directement de la forme de la trajectoire, puisque la pente est déterminée à partir du terrain situé à côté de cette trajectoire. En effet, comme la pente maximale n'est en général pas orientée selon la trajectoire, il ne s'agit pas de la dérivée de l'altitude selon cette trajectoire mais du gradient maximal de l'altitude défini par le relief situé à côté de la trajectoire.

En particulier, dans le cas extrême d'une trajectoire horizontale, par exemple serpentant de part et d'autre d'une ligne de crête, les variations de direction et d'amplitude de la pente maximale d'un versant à l'autre, ou simplement le long d'un même versant, fourniront des informations pertinentes, alors qu'un procédé utilisant les variations d'altitude de la trajectoire serait inefficace.

Le mobile de l'invention peut être un véhicule ou simplement un individu estimant ou mesurant l'amplitude de la pente et sa direction horizontale.

Avantageusement, le mobile étant un véhicule, on détermine l'orientation de la normale au relief par une mesure de l'attitude du véhicule.

Le mobile, sauf s'il s'agit d'un individu, contribue ainsi à capter l'orientation du terrain, en association par exemple avec un compas flottant et un niveau à bulle ou avec un pendule.

Dans un mode de mise en oeuvre, on détermine ladite orientation de la normale au relief en plusieurs points du tronçon de trajectoire estimée, on entraîne en translation le tronçon de trajectoire estimée pour que chaque point de celui-ci balaie une aire d'incertitude entourant la position estimée du point considéré, on repère une position de balayage correspondant à une corrélation optimale entre la suite des orientations mesurées et celles fournies par la carte et on corrige la position estimée du tronçon de trajectoire en le ramenant sur la position de balayage optimale.

On peut ainsi "recaler" cycliquement la position du mobile.

Dans un autre mode de mise en oeuvre, on compare cycliquement, en des positions estimées successives le long de la trajectoire estimée, un seuil d'inclinaison sur la verticale avec l'orientation mesurée de la normale au terrain et, lorsque l'inclinaison mesurée sur la verticale locale dépasse le seuil, on compare l'orientation mesurée de la normale avec celles fournies par la carte pour diverses positions dans une aire d'incertitude entourant la position estimée considérée et on retient comme position réelle celle dont l'orientation de la normale relevée sur la carte diffère le moins de celle mesurée.

Un relief accentué permet alors de recaler la position avec précision.

Encore dans un autre mode de mise en oeuvre, on mesure ladite orientation de la normale en plusieurs points de la trajectoire estimée, on détermine pour chaque point, par comparaison avec un modèle numérique de terrain faisant office de carte, une erreur d'orientation de la normale mesurée que l'on soumet à un filtrage de Kalman pour, à partir du modèle numérique de terrain, déterminer une correction de position du tronçon de trajectoire estimée, pour laquelle le filtrage de Kalman fournit une erreur filtrée minimale des orientations mesurées.

On peut ainsi effectuer automatiquement un recalage continu de la position.

Dans ce dernier cas, on peut déterminer la courbure locale du terrain par calcul des dérivées secondes de l'altitude du terrain dans deux directions horizontales et, dans une aire d'incertitude entourant une position estimée considérée, on recherche, dans le modèle numérique de terrain, une position optimale dont l'orientation de la normale est identique à une orientation estimée, par filtrage de Kalman, de la normale mesurée et on considère ladite position optimale comme étant la position réelle.

L'invention sera mieux comprise à l'aide de la description suivante de trois modes de réalisation d'un système de navigation mettant en oeuvre le procédé de l'invention, en référence au dessin annexé, sur lequel:

- la figure 1 représente en perspective un relief sur lequel se déplace un véhicule,
- la figure 2 est un synoptique illustrant les étapes du procédé de l'invention et
- la figure 3 représente un tronçon de trajectoire du véhicule et les informations associées pour mettre en oeuvre le procédé de l'invention.

Dans cet exemple, le véhicule 1 mettant en oeuvre le procédé de l'invention est un véhicule automobile se déplaçant selon une trajectoire 2 sur les pentes d'une chaîne montagneuse, pentes présentant des orientations différentes, repérées ici par l'orientation de leur normale 3 au terrain dans un repère terrestre constitué ici des directions de site et d'azimut et de la verticale locale.

Un compas flottant 4 et un niveau à bulle 6, équivalant à un pendule, embarqués à bord du véhicule 1, fournissent respectivement un angle d'azimut 5 et deux angles d'attitude, ici selon deux directions perpendiculaires de dévers 7 et de pente 8 du véhicule 1, donc dans un repère dont deux directions de référence, à savoir un axe longitudinal et un axe transversal, sont liées au véhicule 1, la troisième direction de référence étant aussi la verticale locale. Un odomètre 9 fournit une indication 10 de la distance parcourue, tandis qu'une carte 11, ici un modèle numérique de terrain, fournit une information 12 représentant l'orientation de la normale au terrain, ici aussi dans un repère en site, azimut et verticale locale.

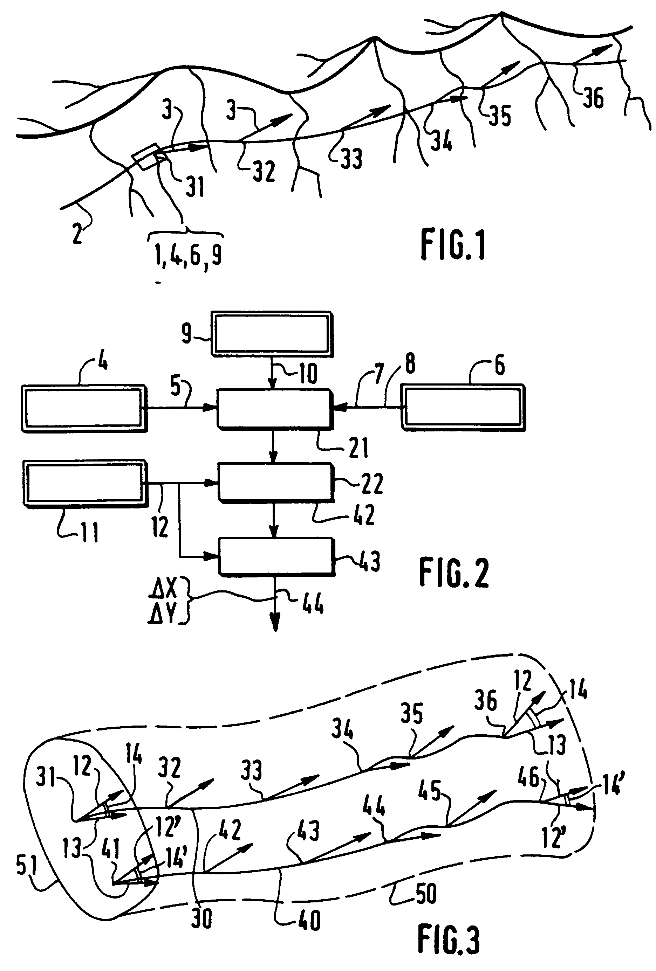

A une étape 21 du premier mode de mise en oeuvre du procédé de l'invention, on relève une suite de valeurs de distances parcourues 10 et d'angles d'azimut 5 associés pour déterminer une suite de positions 31 - 36 sur un tronçon de trajectoire estimée 30 (figure 3) et on associe à chaque position 31 - 36 les valeurs correspondantes d'angles d'azimut 5 et d'attitude 7 et 8.

Les angles d'attitude 7 et 8 permettent de définir un plan tangent au terrain à la position considérée 31 - 36 et d'en déterminer l'orientation de la ligne de plus grande pente, dans le repère lié au véhicule 1, donc aussi l'orientation de la normale 3 à ce plan tangent. Par rotation du plan tangent et de sa normale autour de l'axe vertical local d'un angle égal à l'angle d'azimut, on obtient ainsi l'orientation de cette normale alors référencée 13 dans ce repère terrestre, repère compatible avec celui du modèle numérique de terrain 11.

A une étape 22, on reporte sur le modèle numérique de terrain 11 le tronçon de la trajectoire estimée 30 et on compare, pour chaque point 31 - 36, l'orientation mesurée de la normale 13 à l'orientation 12 fournie par le modèle numérique de terrain 11 pour le point considéré. On détermine ainsi une valeur de corrélation d'après les différences angulaires 14, ou erreurs, entre les orientations 12 et 13 comparées.

On entraîne ensuite en translation le tronçon de trajectoire estimée 30 pour lui faire balayer une aire d'incertitude 50 entourant sa position estimée 30. Cette aire d'incertitude 50 correspond à l'aire balayée par une aire d'incertitude, comme l'aire 51 entourant le point 31, qui se déplacerait sur le tronçon 30. Pour chaque position de balayage, comme 40, et, pour chaque point 41 - 46 du tronçon de trajectoire 40, on procède, comme ci-dessus, à une corrélation d'après la différence angulaire 14' entre l'orientation mesurée 13 et celle 12' fournie par le modèle numérique de terrain 11 pour les points 41 - 46. En fin de balayage, on repère celle des positions de balayage correspondant à une corrélation optimale entre la suite des orientations mesurées 13 de la normale au terrain et celles 12 fournies par le modèle numérique de terrain 11 et on corrige la position estimée du tronçon de trajectoire 30 en le ramenant sur la position de balayage correspondant à la corrélation optimale.

Cette corrélation des orientations des normales respectivement mesurée 13 et fournie 12 par le modèle numérique de terrain 11 équivaut, par rotation de 90 degrés, à comparer l'orientation de deux vecteurs orientés selon les lignes de plus grande pente respectivement mesurée et fournie par le modèle numérique de terrain 11.

Dans le deuxième mode de mise en oeuvre du procédé de l'invention, on compare cycliquement, pour les positions estimées successives 31 - 36 le long de la trajectoire estimée 30, un seuil d'inclinaison, par rapport à la verticale locale, avec l'orientation mesurée 13 de la normale au terrain et, lorsque l'inclinaison mesurée sur la verticale dépasse le seuil, on recherche, dans l'aire d'incertitude 51 du modèle numérique de terrain 11 entourant la position estimée considérée, comme 31, une position optimale 41, dont l'orientation de la normale 12' relevée sur le modèle numérique de terrain 11 diffère le moins de celle mesurée 13, et on la considère comme position réelle.

Le recalage de position intervient ainsi en des positions dont le relief est localement accentué, ce qui permet de localiser avec précision la position du véhicule 1. On peut aussi choisir un seuil correspondant non pas à une pente mais à une variation déterminée de pente.

Dans le troisième mode de mise en oeuvre du procédé de l'invention, on mesure l'orientation 13 de la normale en plusieurs points 31 - 36 de la trajectoire estimée 30, on détermine pour chaque point 31 - 36, par comparaison avec le modèle numérique de terrain 11, l'erreur d'orientation 14 de la normale mesurée 13 que l'on soumet à un filtrage de Kalman pour, à partir du modèle numérique de terrain 11, déterminer une correction de position du tronçon de trajectoire estimée 30, pour laquelle le filtrage de Kalman fournit une erreur filtrée minimale des orientations mesurées 13.

L'étape 22 de la figure 2 est alors remplacée par une étape 42 qui fournit les erreurs d'orientation 14 de la normale 13 par rapport à la normale 12 fournie par le modèle numérique de terrain 11.

Le résultat de l'étape 42 subit, à une étape 43, un filtrage de Kalman par lequel, par comparaison avec la courbure du terrain, déterminée d'après les variations d'orientation de la normale 12 au terrain entre deux points proches fournies par le modèle numérique de terrain 11, on rend minimale l'erreur cumulée en déplaçant le tronçon de trajectoire estimée 30, sensiblement parallèlement à lui-même, jusqu'à obtenir la meilleure corrélation entre les mesures de pente 13 et les pentes 12 relevées sur le modèle numérique de terrain 11.

Le filtrage de Kalman permet en effet de calculer, partant d'une position comme 31 et effectuant un petit déplacement horizontal de $\Delta X$ et $\Delta Y$ selon respectivement les deux axes OX et OY horizontaux du repère, deux écarts, ou "innovations", entre les pentes du modèle numérique de terrain 11 selon ces deux axes OX et OY et les pentes estimées $\hat{P}x$ et $\hat{P}y$ correspondantes calculées par filtrage de Kalman d'après la suite des orientations mesurées des normales 13, à partir des équations:

$$Px - \hat{P}x = \partial Px / \partial x \cdot \Delta X + \partial Px / \partial Y \cdot \Delta Y$$

$$Py - \hat{P}y = \partial Py / \partial x \cdot \Delta X + \partial Py / \partial Y \cdot \Delta Y$$

avec:

$$Px = \partial z / \partial x$$

et

$$Py = \partial z / \partial y$$

étant les gradients de l'altitude $\underline{z}$ du terrain selon les deux directions OX, OY, d'où:

$$\frac{\partial Px}{\partial x} = \frac{\partial^2 z}{\partial x^2} \qquad \text{et} \qquad \frac{\partial Px}{\partial y} = \frac{\partial^2 z}{\partial x . \partial y}$$

et, de même:

$$\frac{\partial Py}{\partial y} = \frac{\partial^2 z}{\partial y^2} \qquad \text{et} \qquad \frac{\partial Py}{\partial x} = \frac{\partial^2 z}{\partial y . \partial x}$$

Le filtrage de Kalman fournit alors les valeurs $\Delta X$ et $\Delta Y$, donc un vecteur horizontal 44 de correction de position, qui rendent minimales les erreurs d'orientation des normales, compte tenu de la courbure du terrain qui est la dérivée seconde de l'altitude $\underline{z}$.

En d'autres termes, on procède à une corrélation de pente; la connaissance de la pente du terrain P estimée d'après les mesures 13 permet de rechercher une position comme 41 correspondant, selon les informations 12 du modèle numérique de terrain 11, à cette pente estimée $\hat{P}$ et donc d'en déduire le déplacement horizontal, de 31 à 41, pour annuler l'erreur de position.

Pour l'ensemble des modes de mise en oeuvre, il est à noter que la mesure de pente peut être effectuée par des mesures autres que la détermination de l'attitude du véhicule 1. En particulier, si le véhicule 1 se trouve sur une route, il présente un angle de dévers quasi-nul si bien que la pente du terrain avoisinant doit être mesurée autrement, par exemple par émission d'un faisceau, optique ou autre, dans plusieurs directions et détection du faisceau réfléchi par le terrain pour en déterminer les distances de divers points du terrain à l'émetteur du faisceau et ainsi reconstituer le relief proche, connaissant l'attitude du véhicule lors de chaque mesure. De même un individu peut estimer directement l'orientation de la normale au terrain ou de la ligne de plus grande pente.

En variante, le niveau à bulle ne fournit qu'une seule indication d'angle, que l'on suppose ici, sans toutefois limiter la généralité de l'exemple, être de dévers 7. De ce fait, l'angle de dévers 7 ne représente l'angle maximal de pente que lorsque le véhicule 1 suit une trajectoire 30 localement orientée perpendiculairement à la direction de pente maximale et, à l'opposé, le dévers 7 est nul lorsque le véhicule 1 suit cette ligne de plus grande pente. D'un de ces extrêmes à l'autre, l'association de l'angle de dévers 7 et de l'angle d'azimut 5 fournit cependant une information non ambiguë sur la pente du terrain selon une direction azimutale donnée, pente dont on peut effectuer la corrélation avec une pente selon cette même direction calculée d'après le modèle numérique de terrain 11. Ainsi, dans ce cas, on utilise donc uniquement la composante de la pente selon une seule direction. Un changement de direction permettrait aussi d'obtenir successivement au moins deux mesures de dévers 7 en deux points proches permettant, avec l'angle d'azimut associé à chacun, de déterminer l'orientation du plan tangent au terrain.

En l'absence de dévers, due par exemple à une circulation sur route, on détectera la pente relative du véhicule 1 en orientant la direction de sensibilité maximale du niveau à bulle dans une direction horizontale inclinée sur la direction transversale du véhicule 1, de préférence dans sa direction longitudinale. De même, une simple mesure du signe de la pente selon une direction liée au véhicule 1 permettrait encore d'établir une corrélation avec les informations 12 relevées sur le modèle numérique de terrain 11, dans la mesure où la trajectoire 30 entraînerait des changements de ce signe.

Dans cet exemple, le modèle numérique de terrain 11 a été établi à partir d'une carte classique fournissant les altitudes des points du terrain. La direction horizontale de la ligne de plus grande pente est, en chaque point, perpendiculaire à la normale à la courbe de niveau passant par le point, tandis que la valeur de la pente, ou tangente de l'angle de site, varie en fonction inverse de la distance entre deux courbes de niveau adjacentes. La normale au terrain est dans un plan vertical passant par le vecteur tangent au terrain le long de la ligne de plus grande pente, défini ci-dessus, et est perpendiculaire à celui-ci. En pratique, un maillage par des triangles sensiblement équilatéraux définis par les altitudes de leurs trois sommets permet de mémoriser, pour chaque maille, l'orientation de la pente moyenne ou de la normale au terrain, ce qui limite le volume mémoire nécessaire. Il est encore possible d'utiliser un modèle numérique de terrain classique et de calculer l'orientation de la pente ou de la normale aux points considérés au fur et à mesure des besoins, par exemple à partir des altitudes des trois sommets d'un triangle de maillage.

**Revendications**

1. Procédé de navigation terrestre dans lequel, au moyen d'instruments d'aide à la navigation associés à un mobile, on estime un tronçon de trajectoire (30) du mobile et des caractéristiques associées du relief parcouru que l'on compare à des caractéristiques homologues d'une carte (11) du relief concerné pour en déterminer la position réelle horizontale (40) du tronçon de trajectoire (30), procédé caractérisé par le fait que lesdites caractéristiques sont représentatives de l'orientation, dans un repère terrestre, de la normale (13) au relief considéré.

2. Procédé selon la revendication 1, dans lequel, le mobile étant un véhicule, on détermine l'orientation de la normale (13) au relief par une mesure de l'attitude (7, 8) du véhicule.

3. Procédé selon l'une des revendications 1 et 2, dans lequel on détermine ladite orientation de la normale (13) au relief en plusieurs points (31 - 36) du tronçon de trajectoire estimée (30), on entraîne en translation le tronçon de trajectoire estimée (30) pour que chaque point (31 - 36) de celui-ci balaie une aire d'incertitude (51) entourant la position estimée du point considéré (31-36), on repère une position de balayage (40) correspondant à une corrélation optimale entre la suite des orientations mesurées (13) et celles (12, 12') fournies par la carte (11) et on corrige la position estimée (30) du tronçon de trajectoire en le ramenant sur la position (40) de balayage optimale.

4. Procédé selon l'une des revendications 1 et 2, dans lequel on compare cycliquement, en des positions estimées successives (31 - 36) le long de la trajectoire estimée (30), un seuil d'inclinaison sur la verticale avec l'orientation mesurée (13) de la normale au terrain et, lorsque l'inclinaison mesurée sur la verticale locale dépasse le seuil, on compare l'orientation mesurée de la normale (13) avec celles fournies par la carte (11) pour diverses positions dans une aire d'incertitude (51) entourant la position estimée considérée (31) et on retient comme position réelle celle (41) dont l'orientation de la normale (12') relevée sur la carte (11) diffère le moins de celle mesurée (13).

5. Procédé selon l'une des revendications 1 et 2, dans lequel on mesure ladite orientation (13) de la normale en plusieurs points (31 - 36) de la trajectoire estimée (30), on détermine pour chaque point (31 - 36), par comparaison avec un modèle numérique de terrain faisant office de carte (11), une erreur d'orientation (14) de la normale mesurée (13) que l'on soumet à un filtrage de Kalman pour, à partir du modèle numérique de terrain (11), déterminer une correction de position du tronçon de trajectoire estimée (30), pour laquelle le filtrage de Kalman fournit une erreur filtrée minimale des orientations mesurées (13).

6. Procédé selon la revendication 5, dans lequel on détermine la courbure locale du terrain par calcul des dérivées secondes de l'altitude du terrain dans deux directions horizontales (OX, OY) et, dans une aire d'incertitude (51) entourant une position estimée considérée (31), on recherche, dans le modèle numérique de terrain (11), une position optimale (41) dont l'orientation de la normale (12) est identique à une orientation estimée, par filtrage de Kalman, de la normale mesurée (13) et on considère ladite position optimale (41) comme étant la position réelle.

## Patentansprüche

1. Verfahren zur Land navigation, bei dem man unter Verwendung von Hilfsinstrumenten für die Navigation, die einem bewegten Körper zugeordnet sind, ein Teilstück einer Trajektorie (30) des bewegten Körpers und Eigenschaften, die dem durchfahrenen Relief zugeordnet sind, abschätzt, welche man mit den homologen Eigenschaften einer Karte (11) des betreffenden Reliefs vergleicht, um dadurch die reale horizontale Position (40) des Teilstücks der Trajektorie (30) zu bestimmen,
dadurch gekennzeichnet,
daß die Eigenschaften für die Orientierung einer Normalen (13) auf das betrachtete Relief in einer terrestrischen Markierung repräsentativ sind.

2. Verfahren nach Anspruch 1,
wobei der bewegte Körper ein Fahrzeug ist, und wobei man die Orientierung der Normalen (13) auf das Relief mittels einer Messung der Stellung (7, 8) des Fahrzeugs bestimmt.

3. Verfahren nach Anspruch 1 und 2,
wobei man die Orientierung der Normalen (13) auf das Relief an mehreren Punkten (31 bis 36) des Teilstücks der abgeschätzten Trajektorie (30) bestimmt, man durch eine Translation das Teilstück der abgeschätzten Trajektorie (30) mitnimmt, so daß jeder Punkt (31 bis 36) von dieser eine Unbestimmtheit fläche (51) abtastet, die die abgeschätzte Position des betrachteten Punktes (31 bis 36) umgibt, man eine Abtastposition (40), die einer optimalen Korrelation zwischen der Folge der gemessenen Orientierungen (13) und denjenigen (12, 12'), die sich nach der Karte (11) ergeben, festlegt, und man die abgeschätzte Position (30) des Teilstücks der Trajektorie korrigiert, indem man sie auf die Position (40) der optimalen Abtastung zurückführt.

4. Verfahren nach Anspruch 1 und 2,
wobei man zyklisch an den nacheinander abgeschätzten Positionen (31 bis 36) entlang der abgeschätzten Trajektorie (30) einen Neigungswert auf die Vertikale mit der gemessenen Orientierung (13) der Normalen auf das Gelände vergleicht, und man, wenn die auf die lokale Vertikale gemessene Neigung den Wert übersteigt, die gemessene Orientierung der Normalen (13) mit den von der Karte (11) für verschiendene Positionen gelieferten Orientierungen in einer Unbestimmtheit fläche (51) vergleicht, die die betrachtete abgeschätzte Position (31) umgibt, und man als reale Position diejenige Position (41) festhält, bei der die Orientierung der Normalen (12'), die von der Karte (11) aufgenommen wird, am wenigsten von der gemessenen Orientierung (13) abweicht.

5. Verfahren nach Anspruch 1 und 2,
wobei man die Orientierung (13) der Normalen an mehreren Punkten (31 bis 36) der abgeschätzten Trajektorie (30) mißt, man für jeden Punkt (31 bis 36) durch einen Vergleich mit einem numerischen Geländemodell, das die Funktion der Karte (11) übernimmt, einen Fehler der Orientierung (14) der gemessenen Normalen (13) bestimmt, den man einer Kalman-Filterung unterwirft, um dann, ausgehend von dem numerischen Geländemodell (11), eine Korrektur der Position des Teilstücks der abgeschätzten Trajektorie (30) zu bestimmen, für die die Kalman-Filterung einen minimalen gefilterten Wert der gemessenen Orientierungen (13) ergibt.

6. Verfahren nach Anspruch 5,
wobei man die lokale Krümmung des Geländes durch eine Berechnung der zweiten Ableitungen der Höhe des Geländes in zwei horizontalen Richtungen (OX, OY) und in einer Unbestimmtheit fläche (51) bestimmt, die eine betrachtete abgeschätzte Position (31) umgibt, wobei man in dem numerischen Geländemodell (11) eine optimale Position (41) sucht, deren Orientierung der Normalen (12) identisch mit einer mit der Kalman-Filterung abgeschätzten Orientierung der gemessenen Normalen (13) ist, und man die optimale Position (41) als die reale Position betrachtet.

## Claims

1. Method of navigation on land in which, by means of navigation assisting instruments associated with a moving body, one estimates a section of trajectory (30) of the moving body and associated characteristics of the covered relief which one compares with similar characteristics of a map (11) of the relief in question in order to determine therefrom the actual horizontal position (40) of the section of trajectory (30), which method is characterised by the fact that said characteristics are representative of the orientation, in a land reference, of the normal (13) to the relief in question.

2. Method according to claim 1, in which, the moving body being a vehicle, one determines the orientation of the normal (13) to the relief by measuring the attitude (7, 8) of the vehicle.

3. Method according to one of claims 1 and 2, in which one determines said orientation of the normal (13) to the relief at several points (31-36) of the section of estimated trajectory (30), one moves the section of estimated trajectory (30) in translation in order that each point (31-36) of the latter sweeps an area of uncertainty (51) surrounding the estimated position of the point in question (31-36), one marks a sweeping position (40) corresponding to an optimum correlation between the succession of orientations measured (13) and those (12, 12') supplied by the map (11) and one corrects the estimated position (30) of the section of trajectory by moving it to the optimum sweeping position (40).

4. Method according to one of claims 1 and 2, in which one compares cyclically, at successive estimated positions (31-36) along the estimated trajectory (30), a threshold of inclination to the vertical with the measured orientation (13) of the normal to the ground and, when the inclination measured on the local vertical exceeds the threshold, one compares the measured orientation of the normal (13) with those provided by the map (11) for various positions in an area of uncertainty (51) surrounding the estimated position in question (31) and one keeps as the actual position that (41) of which the orientation of the normal (12') taken from the map (11) differs least from that measured (13).

5. Method according to one of claims 1 and 2, in which one measures said orientation (13) of the normal at several points (31-36) of the estimated trajectory (30), one determines for each point (31-36), by comparison with a digital ground model acting as a map (11), an orientation error (14) of the measured normal (13) which one subjects to Kalman filtering in order, from the digital ground model (11), to determine a positional correction of the section of estimated trajectory (30), for which the Kalman filtering supplies a minimal filtered error of the orientations measured (13).

6. Method according to claim 5, in which one determines the local curvature of the ground by calculation of the second differentials of the altitude of the ground in two horizontal directions (OX, OY) and, in an area of uncertainty (51) surrounding an estimated position in question (31), one seeks, in the digital ground model (11), an optimum position (41) of which the orientation of the normal (12) is identical to an estimated orientation, by Kalman filtering, of the measured normal (13) and one considers said optimum position (41) as being the actual position.

FIG.1

FIG.2

FIG.3